# FASCICULE DE BREVET EUROPEEN

(11) **EP 2 202 122 B1**
(45) Date de publication et mention de la délivrance du brevet: **14.11.2012**
(21) Numéro de dépôt: 09179518.7
(22) Date de dépôt: 16.12.2009
(51) Int. Cl.: B60T 15/02, B60T 17/08

(54) **Cylindre de frein ferroviaire**
Schienenfahrzeugbremszylinder
Railway brake cylinder

(30) Priorité: 24.12.2008 FR 0859061
(43) Date de publication de la demande: 30.06.2010
(73) Titulaire: Faiveley Transport Amiens, 80000 Amiens (FR)
(72) Inventeur: Goncalves, Claudino, 80620 Ribeaucourt (FR)
(74) Mandataire: Lepelletier-Beaufond, François

(56) Documents cités:
- FR-A- 2 716 856
- GB-A- 264 197
- GB-A- 865 155
- US-A- 5 429 426

## Description

L'invention concerne le domaine du freinage des véhicules ferroviaires.

Elle concerne plus particulièrement un cylindre de frein commandé par un agent de pression pneumatique et adapté à agir sur une timonerie afin d'actionner un dispositif de freinage, comportant par exemple un ou des patins de friction adaptés à serrer un disque de frein relié aux roues du véhicule ou directement une roue du véhicule.

Un tel cylindre de frein comporte généralement un corps et un piston mobile par rapport au corps pour agir sur une timonerie de freinage et délimitant avec ledit corps une chambre de pression adaptée à être alimentée par une source d'agent de pression pneumatique.

Un tel dispositif est connu de FR 2 716 856.

Certains cylindres de frein comportent en outre un dispositif de freinage manuel comportant un organe d'actionnement auxiliaire mobile par rapport audit corps et audit piston. Cet organe, en l'absence de contraintes extérieures, occupe une position de repos dans laquelle il est à l'écart du piston de sorte qu'il n'exerce aucun effort sur lui. Après que le véhicule ferroviaire a été mis à l'arrêt grâce à l'action de l'agent de pression sur le piston, un opérateur vient actionner cet organe, par exemple à l'aide d'un levier multiplicateur, pour lui faire occuper une position de poussée dans laquelle il est au contact du piston et exerce un effort mécanique sur lui.

L'invention vise à améliorer les cylindres de frein comportant un tel dispositif de freinage manuel.

A cet effet, l'invention vise un cylindre de frein ferroviaire comportant :
- un corps ;
- un piston mobile par rapport au corps pour agir sur une timonerie de freinage et délimitant avec ledit corps une chambre de pression adaptée à être alimentée par une source d'agent de pression pneumatique ;
- un organe d'actionnement auxiliaire mobile par rapport audit corps et audit piston, ledit organe d'actionnement étant lié mécaniquement à des moyens de commande manuels pour lui faire occuper :
   - soit une position de repos dans laquelle il est à l'écart dudit piston de sorte qu'il n'exerce aucun effort sur ledit piston ;
   - soit une position de poussée dans laquelle il est au contact dudit piston et exerce un effort mécanique sur lui ;
caractérisé en ce que le cylindre de frein comporte :
- un premier orifice en communication fluide avec ladite chambre ;
- un deuxième orifice en communication fluide avec l'atmosphère ; et
- des moyens de liaison sélectifs entre ledit premier orifice et ledit deuxième orifice, lesdits moyens de liaison sélectifs étant adaptés à occuper :
   - une position d'isolement dans laquelle ledit premier orifice et ledit deuxième orifice sont isolés l'un de l'autre ; et
   - une position de liaison dans laquelle ledit premier orifice et ledit deuxième orifice sont en communication fluide ;
   lesdits moyens de liaison sélectifs étant liés mécaniquement audit organe d'actionnement auxiliaire pour que :
   - lorsque ledit organe d'actionnement auxiliaire occupe ladite position de repos, lesdits moyens de liaison sélectifs occupent ladite position d'isolement ; et
   - lorsque ledit organe d'actionnement auxiliaire occupe ladite position de poussée, lesdits moyens de liaison sélectifs occupent ladite position de liaison.

Lorsqu'un opérateur actionne manuellement l'organe d'actionnement auxiliaire, les moyens de liaison sélectifs liés mécaniquement à l'organe d'actionnement auxiliaire changent de position de sorte à mettre en communication fluide le premier et le deuxième orifice du cylindre. La chambre de pression se retrouve ainsi en communication fluide avec l'atmosphère, ce qui provoque la fuite de l'agent de pression et la suppression de l'effort pneumatique exercé sur le piston.

Ainsi, l'effort de freinage pneumatique est quasiment nul lorsque l'organe d'actionnement vient au contact du piston.

La non-superposition des freinages pneumatique et manuel qu'offre le cylindre selon l'invention, permet d'éviter le surdimensionnement du piston et de la timonerie tel que cela était pratiqué dans les cylindres de frein conventionnels à dispositif de freinage manuel.

Nécessitant moins de matière pour leur fabrication, ils sont plus légers (ce qui contribue à l'amélioration des performances du véhicule ferroviaire), moins volumineux (ce qui est d'importance dans un véhicule ferroviaire où l'espace est compté) et plus économiques. Enfin, ces éléments sont également plus simples à fabriquer.

Selon des caractéristiques préférées, prises seules ou en combinaison :
- lesdits moyens de liaison sélectifs comportent un coulisseau monté à l'intérieur dudit organe d'actionnement auxiliaire pour que :
   - lorsque ledit organe d'actionnement auxiliaire est en position de repos, ledit coulisseau saille dudit organe en direction dudit piston ; et
   - lorsque ledit organe d'actionnement auxiliaire est en position de poussée, ledit coulisseau est à fleur dudit organe d'actionnement auxiliaire et au contact dudit piston ;
- ledit cylindre de frein ferroviaire comporte un troisième orifice en communication avec ladite source d'agent de pression pneumatique pour que :
   - lorsque ledit coulisseau occupe ladite position d'isolement, ledit troisième orifice et ledit premier orifice sont en communication fluide ; et
   - lorsque ledit coulisseau occupe ladite position de liaison, ledit troisième orifice et ledit premier orifice sont isolés l'un de l'autre ;
- ledit cylindre de frein ferroviaire comporte un ressort pour solliciter en permanence ledit coulisseau vers ladite position saillante ;
- ledit ressort est disposé entre ledit coulisseau et ledit organe d'actionnement auxiliaire ;
- lesdits moyens de commande manuels comportent un organe multiplicateur d'effort pour agir sur ledit organe d'actionnement auxiliaire ;
- lesdits moyens de liaison sélectifs comportent un distributeur comportant ledit premier orifice et ledit deuxième orifice, ledit distributeur et ledit organe d'actionnement auxiliaire étant reliés par des moyens de liaison mécanique de sorte qu'ils puissent être actionnés simultanément ;
- ledit distributeur comporte des moyens de rappel le sollicitant en permanence vers sa position d'isolement ;
- ledit distributeur comporte un troisième orifice en communication fluide avec ladite source d'agent de pression pneumatique pour que :
   - lorsque ledit distributeur occupe ladite position d'isolement, ledit troisième orifice et ledit premier orifice sont en communication fluide ; et
   - lorsque ledit distributeur occupe ladite position de liaison, ledit troisième orifice et ledit premier orifice sont isolés l'un de l'autre ;
- ladite chambre de pression est de façon permanente en communication fluide avec ladite source d'agent de pression pneumatique ;
- lesdits moyens de commande manuels comportent un organe multiplicateur d'effort pour agir sur ledit organe d'actionnement auxiliaire et ledit distributeur ;
- ledit cylindre de frein ferroviaire comporte un deuxième distributeur comportant un premier orifice en communication fluide avec ladite chambre et un deuxième orifice en communication fluide avec ladite source d'agent de pression pneumatique, ledit deuxième distributeur étant adapté à occuper:
   - une position d'isolement dans laquelle ledit premier orifice et ledit deuxième orifice sont isolés l'un de l'autre ; et une position de liaison dans laquelle ledit premier orifice et ledit deuxième orifice sont en communication fluide ;
   - lesdits moyens de liaison mécanique reliant également ledit deuxième distributeur audit organe d'actionnement auxiliaire et audit distributeur pour que :

   - lorsque ledit organe d'actionnement auxiliaire occupe ladite position de repos et que ledit distributeur occupe ladite position d'isolement, ledit deuxième distributeur occupe ladite position de liaison ; et
   - lorsque ledit organe d'actionnement auxiliaire occupe ladite position de poussée et que ledit distributeur occupe ladite position de liaison, ledit deuxième distributeur occupe ladite position d'isolement ;
- ledit deuxième distributeur comporte des moyens de rappel sollicitant en permanence ledit deuxième distributeur vers sa position d'isolement ; et/ou
- lesdits moyens de commande manuels comportent un organe multiplicateur d'effort pour agir sur ledit organe d'actionnement auxiliaire, ledit distributeur et ledit deuxième distributeur.

D'autres caractéristiques et avantages de l'invention apparaissent à la lumière de la description qui va suivre de modes de réalisation préférés, donnée à titre d'exemple non limitatif, description faite en référence aux dessins annexés, dans lesquels :
- les figures 1 et 2 illustrent schématiquement les principes de fonctionnement d'une timonerie de frein ferroviaire actionnée par un cylindre de frein, ce cylindre de frein étant respectivement en position d'attente (figure 1) et en position de freinage (figure 2) ;
- les figures 3 à 5 sont des vues en coupe très simplifiées d'un cylindre de frein selon un premier mode de réalisation de l'invention, et ce pour différentes positions de fonctionnement ;
- la figure 6 illustre schématiquement le fonctionnement d'un cylindre de frein selon une variante du premier mode de réalisation de l'invention ;
- la figure 7 illustre schématiquement le fonctionnement d'un cylindre de frein selon un deuxième mode de réalisation de l'invention ; et
- la figure 8 illustre schématiquement le fonctionnement d'un cylindre de frein selon un troisième mode de réalisation de l'invention.

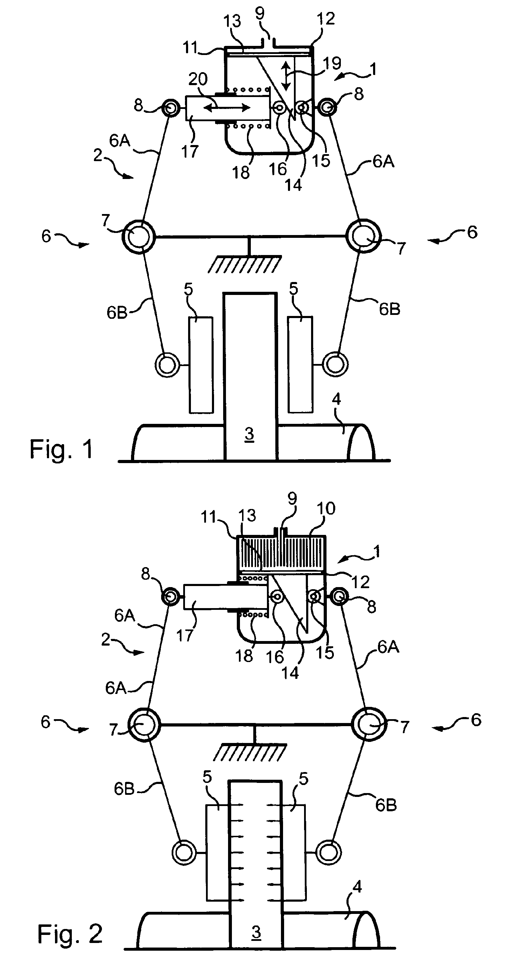

Les figures 1 et 2 représentent un cylindre de frein 1 qui, dans le présent exemple, est adapté à actionner une timonerie 2 de frein ferroviaire. Cet ensemble permet d'agir sur un disque de frein 3 monté par exemple sur un essieu 4 du véhicule ferroviaire, ou directement sur la roue à freiner. Le disque de frein 3 est ici vu de profil et seule sa moitié supérieure a été représentée.

La timonerie 2 comporte de manière classique deux patins de freinage 5 disposés de part et d'autre du disque de frein 3 et qui, en l'absence de sollicitation, sont à l'écart du disque de frein 3 (voir figure 1) et qui, lors d'une action de freinage, sont sollicités par la timonerie 2 contre le disque de frein 3 (voir figure 2) pour ralentir et/ou stopper le disque de frein 3 par friction.

La timonerie 2 comporte à cet effet deux leviers 6 rigides comportant chacun un bras supérieur 6A et un bras inférieur 6B solidaires, chaque levier 6 étant monté en rotation autour d'un axe 7 solidaire du châssis du véhicule ferroviaire. Le bras inférieur 6B de chaque levier 6 est relié à l'un des patins de freinage 5. Le bras supérieur 6A de chaque levier 6 est quant à lui relié à une articulation 8.

Compte-tenu du montage de cette timonerie 2 classique, l'écartement des deux articulations 8 entraîne le serrage du frein tandis que le rapprochement de ces articulations 8 entraîne le desserrage du frein.

Le cylindre de frein 1 est rattaché par deux de ses extrémités aux articulations 8 et est adapté à imprimer aux articulations 8 un tel mouvement de rapprochement ou d'éloignement.

A cet effet, le cylindre de frein 1 est raccordé par un conduit 9 à une source d'agent de pression pneumatique tel que, par exemple, de l'air comprimé.

Le cylindre de frein 1 comporte notamment un corps 11, un piston 13 et un joint de glissement 12 adapté à racler les bords du corps 11, de sorte à définir une chambre de pression 10. Le piston 13 est lui-même attaché à une pièce de coin 14 présentant une section triangulaire. La pièce de coin 14 coopère quant à elle avec une première butée à roulement 15 reliée au corps 11 et avec une deuxième butée à roulement 16 reliée à une tige de poussée 17.

La tige de poussée 17 est formée d'un dispositif couramment dénommé « régleur » et permettant la transmission directe des déplacements de la butée à roulement 16 à l'articulation 8 correspondante tout en rattrapant les jeux entre la deuxième butée à roulement et la pièce de coin 14. Les régleurs sont des dispositifs classiques qui ne seront pas plus décrits en détail ici. Il suffit de mentionner ici que la tige de poussée 17 est adaptée à transmettre à l'articulation 8 correspondante les efforts s'exerçant sur la deuxième butée à roulement 16.

Un ressort 18 est de plus disposé entre le corps 11 et la tige de poussée 17 et a pour fonction de solliciter la deuxième butée à roulement 16 contre la pièce de coin 14.

Le cylindre de frein 1 est ainsi monté entre les deux articulations 8, le corps 11 étant solidaire de l'une de ces articulations 8 et l'extrémité de la tige de poussée 17 étant solidaire de l'autre articulation 8.

Le piston 13 et la pièce de coin 14 sont mobiles selon une première direction 19 qui correspond à la verticale sur les figures 1 et 2. La tige de poussée 17 est quant à elle mobile selon une deuxième direction 20, perpendiculaire à la première direction 19 et qui correspond à l'horizontale sur les figures 1 et 2.

Compte-tenu de cette configuration, lorsque la pièce de coin 14 est sollicitée dans la première direction 19 à enfoncement entre les butées 15, 16, la tige de poussée 17 est par conséquent sollicitée selon la deuxième direction 20 pour provoquer un écartement des deux articulations 8. La pièce de coin 14 permet donc de transformer la course verticale du piston 13 en une course horizontale de la tige de poussée 17 afin d'actionner les leviers 6.

Sur la figure 1, le cylindre de frein 1 est représenté en position d'attente. Dans cette position, la pression de fluide n'est pas exercée, c'est-à-dire que le conduit 9 est mis à la pression atmosphérique. Le ressort 18 qui sollicite la deuxième butée à roulement 16 en direction de la première butée à roulement 15, provoque la montée de la pièce de coin 14 et du piston 13, de sorte que la chambre de pression 10 présente un volume minimal.

Sur la figure 2, le cylindre de frein 1 est représenté en position de freinage. Le conduit 9 reçoit l'agent de pression qui remplit la chambre 10 et sollicite le piston 13 et la pièce de coin 14 vers le bas, ce qui a pour effet d'écarter l'une de l'autre les butées 15, 16 et donc les articulations 8. Le volume de la chambre de pression 10 est maximal dans cette position.

Dès que la pression est supprimée au conduit 9, le cylindre de frein 1 revient à sa position d'attente de la figure 1 sous l'effet du ressort 18 en chassant l'agent de pression de la chambre 10.

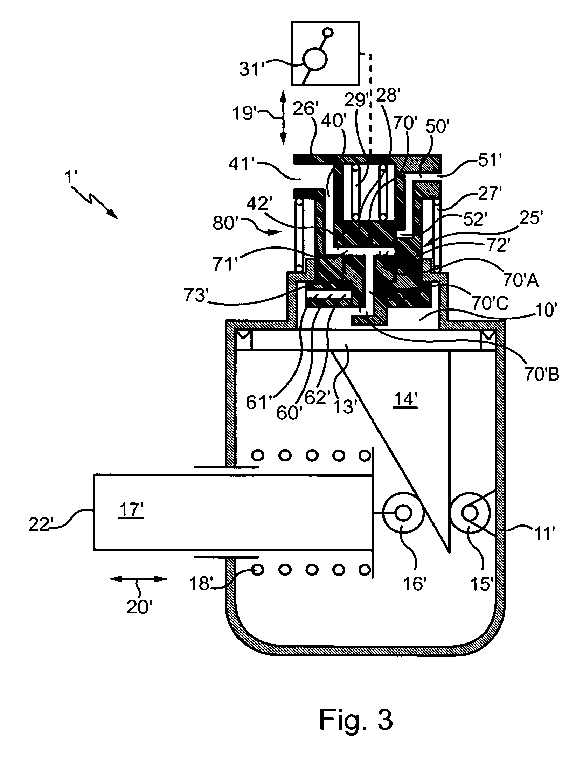

A l'appui de la figure 3, on va maintenant décrire le cylindre de frein 1', selon un premier mode de réalisation de l'invention. Les éléments semblables aux éléments du cylindre de frein 1 décrit précédemment gardent la même numérotation mais avec un '.

Le cylindre de frein 1' comporte ainsi un corps 11' formant une enveloppe dans laquelle sont montés les différents éléments du cylindre de frein 1', notamment un piston 13' mobile selon une première direction 19' et fixé à une pièce de coin 14' adaptée à coopérer à enfoncement entre une première butée à roulement 15' et une deuxième butée à roulement 16'. La première butée à roulement 15' est montée sur le corps 11' et la deuxième butée à roulement 16' est montée à l'extrémité d'une tige de poussée 17', mobile selon une deuxième direction 20', dont l'autre extrémité 22' est destinée à être raccordée à l'une des articulations 8 des schémas des figures 1 et 2, l'autre articulation 8 étant fixée sur le corps 11'.

Un ressort 18' sollicite la tige de poussée 17' pour que la deuxième butée à roulement 16' se rapproche de la première butée à roulement 15', c'est-à-dire vers la position d'attente du cylindre de frein 1 (qui est celle représentée à la figure 3).

Le corps 11' présente une ouverture circulaire 25' en vis-à-vis du piston 13' et recevant à coulissement un organe d'actionnement auxiliaire 26' s'ajustant dans l'ouverture 25' de manière étanche grâce à un joint torique non représenté. L'organe d'actionnement auxiliaire 26' est sollicité en permanence à l'écart du piston 13' par des moyens élastiques de secours, formés ici d'un ressort 27'.

L'organe d'actionnement auxiliaire 26' comporte trois conduits internes 40', 50' et 60'.

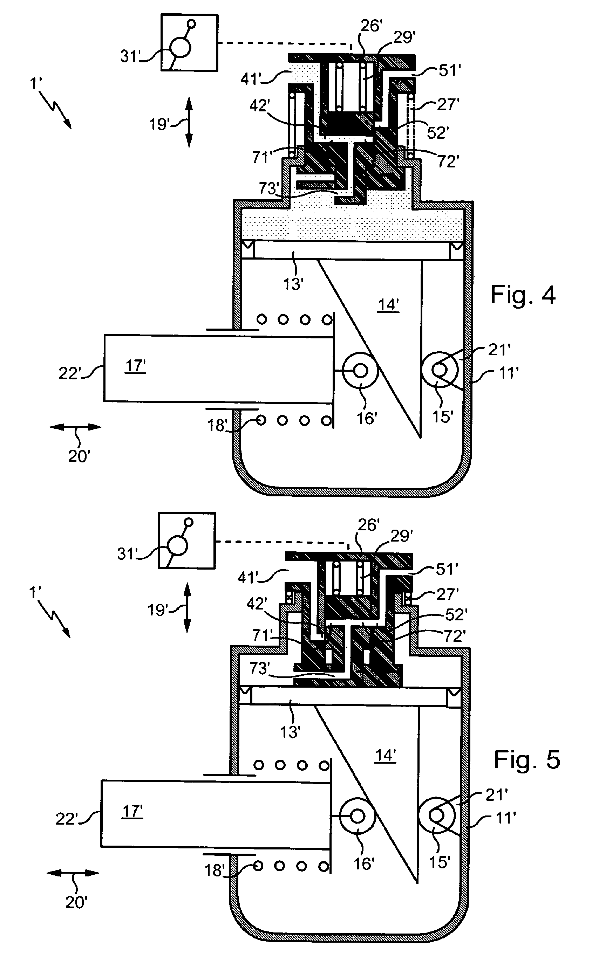

Le conduit 40' présente un orifice externe 41' d'entrée en communication fluide avec une source non représentée d'agent de pression pneumatique (ici de l'air comprimé mais en variante d'autres type de gaz peuvent être utilisés) et un orifice interne 42' débouchant sur un coulisseau 28' monté mobile dans l'organe d'actionnement 26' entre une position saillante (figures 3 et 4) vis-à vis de l'extrémité inférieure de l'organe 26' (celle en regard du piston 13') et une position rétractée (figure 5) dans laquelle le coulisseau 28' est à fleur de cette même extrémité.

Le corps 11', le piston 13', l'organe d'actionnement auxiliaire 26' et le coulisseau 28' délimitent une chambre de pression 10' alimentée en air comprimé à partir de ce conduit 40'.

Le conduit 50' qui se trouve à l'opposé du conduit 40' présente un orifice externe 51' de sortie en communication fluide avec l'atmosphère et un orifice interne 52' débouchant sur le coulisseau 28'.

Le conduit 60' situé à proximité de l'extrémité inférieure de l'organe de poussée 26', présente un orifice externe 61' d'entrée en communication fluide avec la chambre de pression 10' et un orifice interne 62' débouchant sur le coulisseau 28'.

Le coulisseau 28' comporte également un conduit 70' en trois portions.

La première portion supérieure 70'A s'étend transversalement au coulisseau 28' sur toute sa largeur de sorte à présenter deux orifices opposés 71' et 72'. La deuxième portion inférieure 70'B s'étend également transversalement au coulisseau sur la moitié environ de sa largeur et présente un orifice 73'. La troisième portion de liaison 70'C s'étend dans l'axe du coulisseau 28' et relie les deux portions 70'A et 70'B.

Par ailleurs, le coulisseau 28' est en permanence sollicité vers sa position saillante par un ressort 29' disposé entre le coulisseau 28' et l'organe d'actionnement auxiliaire 26'.

Lorsque le coulisseau 28' saille vis-à-vis de l'organe d'actionnement auxiliaire 26' sous l'effet du ressort 29' (figures 3 et 4), il occupe une position stable d'isolement, dans laquelle :
- l'orifice interne 42' du conduit 40' est en regard de l'orifice 71' du conduit 70' ;
- l'orifice interne 52' du conduit 50' est obstrué par le coulisseau 28' ; et
- l'orifice 73' du conduit 70' débouche dans la chambre de pression 10' ;
   de sorte que :

- l'orifice 73' et l'orifice 51' sont isolés l'un de l'autre (en conséquence, la chambre de pression 10' est isolée de l'atmosphère) ; et
- l'orifice 73' et l'orifice 41' sont en communication fluide (en conséquence, la source d'agent de pression pneumatique est en communication fluide avec la chambre 10').

Lorsque le coulisseau 28' est à fleur de l'organe auxiliaire d'actionnement 26' (figure 5), il occupe une position de liaison, dans laquelle :
- l'orifice interne 42' du conduit 40' est obstrué par le coulisseau 28' ;
- l'orifice interne 52' du conduit 50' est au regard de l'orifice 72' du conduit 70' ; et
- l'orifice 73' du conduit 70' est au regard de l'orifice interne 62' du conduit 60' dont l'orifice externe 61' est en communication fluide avec la chambre de pression 10' ;
de sorte que :
- l'orifice 73' et l'orifice 51' sont en communication fluide (en conséquence, la chambre de pression 10' est en communication fluide avec l'atmosphère) ; et
- l'orifice 73' et l'orifice 41' sont isolés l'un de l'autre (en conséquence, la source d'agent de pression pneumatique est isolée de la chambre 10').

On va maintenant décrire le fonctionnement du cylindre de frein 1', toujours à l'appui des figures 3 à 5.

Dans la configuration représentée à la figure 3, la chambre de pression 10' a été vidangée et se trouve à la pression atmosphérique tandis que l'organe d'actionnement auxiliaire 26' est en position de repos et que le coulisseau 28' occupe sa position stable d'isolement.

Le ressort 18' sollicite la tige de poussée 17' pour que la deuxième butée à roulement 16' se rapproche de la première butée à roulement 15', de sorte que la pièce de coin 14' remonte entrainant avec elle le piston 13' qui se trouve alors en position haute.

Pour remettre en service le cylindre de frein 1', de l'air comprimé est injecté par l'orifice externe 41' du conduit 40'. Le coulisseau 28' étant dans sa position d'isolement, la source d'agent de pression pneumatique est en communication fluide avec la chambre de pression 10' qui est en outre isolée de l'atmosphère.

La chambre de pression 10' se remplit d'air comprimé, la pression augmentant au fur et à mesure de l'introduction du fluide de sorte qu'elle entraine le déplacement du piston 13' et donc le freinage de la roue. On se retrouve alors dans la configuration de la figure 4.

Lorsqu'un opérateur souhaite activer le freinage manuel, il exerce à l'aide du levier multiplicateur 31', un effort sur l'organe d'actionnement auxiliaire 26' selon la direction 19'. Cet organe 26' se rapproche alors progressivement du piston 13' jusqu'à ce que l'extrémité saillante du coulisseau 28' vienne toucher le piston 13'. L'effort transmis par le levier 31' à l'organe 26' étant très largement supérieur à l'effort de rappel du ressort 29', la poursuite du mouvement entraine la rétractation du coulisseau 28' et son passage en position de liaison. Désormais en communication fluide avec l'atmosphère et isolée de la source d'agent de pression pneumatique, la chambre 10' se vidange très rapidement. L'isolement de la chambre 10' par rapport à la source d'agent de pression permet de limiter la vidange au volume d'air comprimé contenu dans la chambre 10' (au moment du changement de position du coulisseau 28') et donc d'éviter toute perte d'agent de pression pneumatique dans le circuit d'alimentation.

En poursuivant le mouvement de l'organe d'actionnement auxiliaire 26', celui-ci vient pousser contre le piston 13', appliquant ainsi à ce piston 13' un effort de freinage qui se substitue à l'effort de freinage exercée précédemment par l'air comprimé contenu dans la chambre 10'. On se retrouve alors dans la configuration de la figure 5.

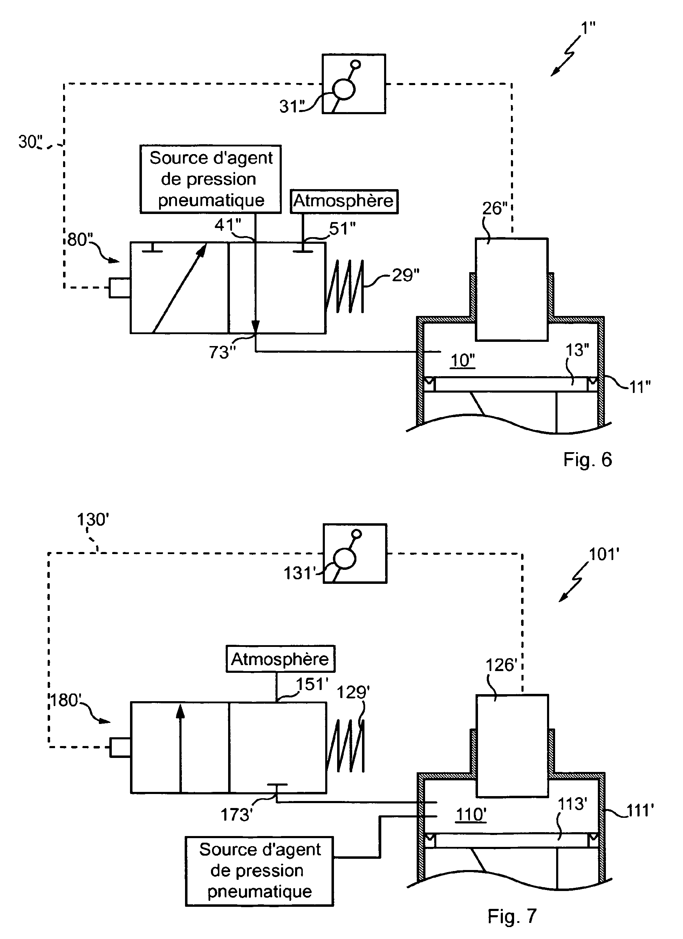

La figure 6 illustre de façon schématique une variante du premier mode de réalisation pour laquelle on a employé les mêmes références numériques mais avec un " au lieu du '.

Le corps 11", le piston 13" et les éléments non représentés du cylindre 1" sont identiques à ceux décrits précédemment.

Cependant, le cylindre 1" ne comporte pas de coulisseau monté mobile dans l'organe d'actionnement auxiliaire 26", les moyens de liaison sélectifs entre orifices étant ici constitués d'un distributeur 80" distinct de l'organe 26". Le distributeur 80" est de type monostable à deux positions (grâce à la présence d'un ressort 29") et à trois orifices 41", 51" et 73" reliés respectivement à une source d'agent de pression pneumatique, à l'atmosphère et à la chambre 10".

Le distributeur 80" est adapté à occuper :
- une première position stable d'isolement dans laquelle les orifices 73" et 51" sont isolés l'un de l'autre tandis que les orifices 73" et 41" sont en communication fluide ; et
- une seconde position de liaison dans laquelle les orifices 73" et 51" sont en communication fluide tandis que les orifices 73" et 41" sont isolés l'un de l'autre.

Par ailleurs, le distributeur 80" et l'organe d'actionnement auxiliaire 26" sont reliés par des moyens de liaison mécanique 30" de sorte qu'ils puissent être actionnés simultanément, par exemple à l'aide d'un levier multiplicateur 31 ", pour que :
- lorsque l'organe d'actionnement auxiliaire 26" occupe la position de repos, le distributeur 80" occupe sa position stable d'isolement ; et
- lorsque l'organe d'actionnement auxiliaire 26" occupe la position de poussée, le distributeur 80" occupe sa position de liaison.

On va maintenant décrire le fonctionnement du cylindre de frein 1".

Lorsqu'un opérateur agit sur le levier multiplicateur 31", le distributeur 80" passe en position de liaison. Désormais en communication fluide avec l'atmosphère et isolée de la source d'agent de pression pneumatique, la chambre 10" se vidange très rapidement. L'isolement de la chambre 10" par rapport à la source d'agent de pression permet de limiter la vidange au volume d'air comprimé contenu dans la chambre 10" (au moment du changement de position du distributeur 80") et donc d'éviter toute perte d'air comprimé dans le circuit d'alimentation.

Parallèlement au changement de position du distributeur 80", l'organe d'actionnement auxiliaire 26" vient pousser contre le piston 13", appliquant ainsi à ce piston 13" un effort de freinage manuel qui se substitue à l'effort de freinage exercée précédemment par l'air comprimé contenu dans la chambre 10".

La figure 7 illustre de façon schématique un deuxième mode de réalisation d'un cylindre de frein selon l'invention, pour lequel on a employé les mêmes références numériques que pour le premier mode de réalisation mais augmentées de 100.

Le corps 111', le piston 113' et les éléments non représentés du cylindre 101' sont identiques au premier mode de réalisation.

Les moyens de liaison sélectifs entre orifices sont ici constitués d'un distributeur 180' de type monostable à deux positions (grâce à la présence d'un ressort 129'), mais présentant uniquement deux orifices externes 151' et 173' reliés respectivement à l'atmosphère et à la chambre de pression 110'.

Le distributeur 180' est adapté à occuper :
- une première position stable d'isolement dans laquelle les orifices 151' et 173' sont isolés l'un de l'autre ; et
- une seconde position de liaison dans laquelle les orifices 151' et 173' sont en communication fluide.

Selon ce mode de réalisation, la chambre de pression 110' est reliée en permanence à la source d'agent de pression pneumatique. Cette dernière se vidange donc entièrement lorsque le distributeur 180' passe dans sa position de liaison sous l'effet d'un effort exercé par le levier multiplicateur 131'.

De la même manière que précédemment, le distributeur 180' et l'organe d'actionnement auxiliaire 126' sont reliés par des moyens de liaison mécanique 130' de sorte qu'ils puissent être actionnés simultanément, par exemple à l'aide d'un levier multiplicateur 131', pour que :
- lorsque l'organe d'actionnement auxiliaire 126' occupe la position de repos, le distributeur 180' occupe sa position stable d'isolement ; et
- lorsque l'organe d'actionnement auxiliaire 126' occupe la position de poussée, le distributeur 180' occupe sa position de liaison.

On va maintenant décrire le fonctionnement du cylindre de frein 101'.

Lorsqu'un opérateur agit sur le levier multiplicateur 131', le distributeur 180' passe en position de liaison. Désormais en communication fluide avec l'atmosphère, la chambre 110' et le circuit d'alimentation en air comprimé se vidangent très rapidement. Parallèlement au changement de position du distributeur 180', l'organe d'actionnement auxiliaire 126' vient pousser contre le piston 113', appliquant ainsi à ce piston 113' un effort de freinage manuel qui se substitue à l'effort de freinage exercée précédemment par l'air comprimé contenu dans la chambre 110'.

Selon une variante non représentée de ce deuxième mode de réalisation, les moyens de liaison sélectifs peuvent comporter à la place du distributeur 180', un coulisseau monté mobile dans l'organe d'actionnement auxiliaire 126' d'une manière similaire au premier mode de réalisation illustré par les figures 3 à 5.

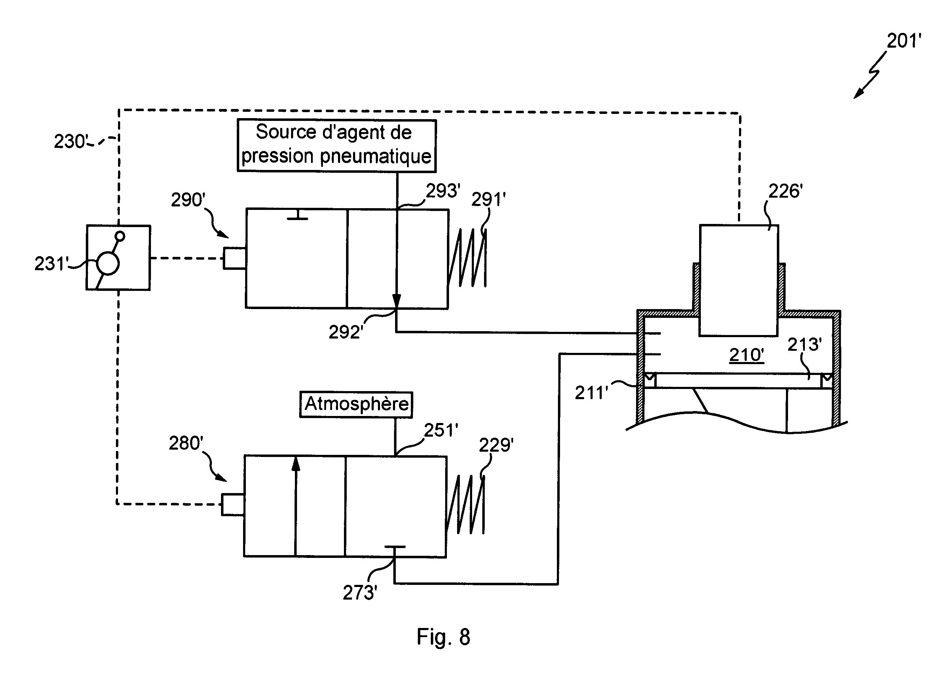

La figure 8 illustre de façon schématique un troisième mode de réalisation d'un cylindre de frein selon l'invention, pour lequel on a employé les mêmes références numériques que pour le premier mode de réalisation mais augmentées de 200.

Le corps 211', le piston 213' et les éléments non représentés du cylindre 201' sont identiques aux modes de réalisation précédents.

Le cylindre 201' comporte deux distributeurs 280' et 290' de type monostable à deux positions grâce à la présence d'un ressort 229', respectivement 291'.

Le distributeur 280' présente deux orifices externes 251' et 273' en communication fluide, respectivement avec l'atmosphère et avec la chambre de pression 210'.

Ce distributeur 280' est adapté à occuper une première position stable d'isolement dans laquelle les orifices 251' et 273' sont isolés l'un de l'autre et seconde position de liaison dans laquelle les orifices 251' et 273' sont en communication fluide.

Le distributeur 290' présente deux orifices externes 292' et 293' reliés respectivement à la chambre de pression 210' et à une source d'agent de pression pneumatique.

Ce distributeur 290' est adapté à occuper une première position stable de liaison dans laquelle les orifices 292' et 293' sont en communication fluide et une seconde position d'isolement dans laquelle les orifices 292' et 293' sont isolés l'un de l'autre.

L'organe d'actionnement auxiliaire 226' et les distributeurs 280' et 290' sont reliés par des moyens de liaison mécanique 230' de sorte qu'ils puissent être actionnés simultanément, par exemple à l'aide d'un levier multiplicateur 231', pour que :
- lorsque l'organe d'actionnement auxiliaire 226' occupe la position de repos, le distributeur 280' occupe la position stable d'isolement et le distributeur 290' occupe la position de liaison ; et
- lorsque l'organe d'actionnement auxiliaire 226' occupe la position de poussée, le distributeur 280' occupe la position de liaison et le distributeur 290' occupe la position stable d'isolement.

On va maintenant décrire le fonctionnement du cylindre de frein 201'. '.

Lorsqu'un opérateur agit sur le levier multiplicateur 231', le distributeur 280' passe en position de liaison tandis que le distributeur 290' passe en position d'isolement. Désormais en communication fluide avec l'atmosphère et isolée de la source d'agent de pression pneumatique, la chambre 210' se vidange très rapidement. Comme expliqué précédemment, l'isolement de la chambre 210' par rapport à la source d'agent de pression permet de limiter la vidange au volume d'air comprimé contenu dans la chambre 210' (au moment du changement de position du distributeur 280') et donc d'éviter toute perte d'air comprimé dans le circuit d'alimentation.

Parallèlement au changement de position des distributeurs 280' et 290', l'organe d'actionnement auxiliaire 226' vient pousser contre le piston 213', appliquant ainsi à ce piston 213' un effort de freinage manuel qui se substitue à l'effort de freinage exercée précédemment par l'air comprimé contenu dans la chambre 210'.

On remarquera que ce mode de réalisation assure exactement les mêmes fonctions que le premier mode de réalisation, celle de vidange de la chambre de pression 210' étant réalisée par le distributeur 280' et celle d'isolement de cette même chambre de pression 210' vis-à-vis de la source d'agent de pression pneumatique étant réalisée par le distributeur 290'.

Selon d'autres variantes non représentées, le levier est remplacé par un treuil ou une manivelle.

De nombreuses autres variantes sont possibles en fonction des circonstances, et l'on rappelle à cet égard que l'invention ne se limite pas aux exemples décrits et représentés.

## Revendications

1. Cylindre de frein ferroviaire comportant :
- uncorps(11';11";111';211');
- un piston (13' ; 13" ; 113' ; 213') mobile par rapport au corps (11' ; 11 " ; 111' ; 211') pour agir sur une timonerie de freinage et délimitant avec ledit corps (11' ; 11" ; 111' ; 211') une chambre de pression (10' ; 10" ; 110' ; 210') adaptée à être alimentée par une source d'agent de pression pneumatique ;
- un organe d'actionnement auxiliaire (26' ; 26" ; 126' ; 226') mobile par rapport audit corps (11' ; 11" ; 111' ; 211') et audit piston (13' ; 13" ; 113' ; 213'), ledit organe d'actionnement étant lié mécaniquement à des moyens de commande manuels pour le faire occuper :
- soit une position de repos dans laquelle il est à l'écart dudit piston (13' ; 13" ; 113' ; 213') de sorte qu'il n'exerce aucun effort sur ledit piston (13' ; 13" ; 113' ; 213');
- soit une position de poussée dans laquelle il est au contact dudit piston (13' ; 13" ; 113' ; 213') et exerce un effort mécanique sur lui ;
**caractérisé en ce que** le cylindre de frein comporte :
- un premier orifice (73' ; 73" ; 173' ; 273') en communication fluide avec ladite chambre (10' ; 10" ; 110' ; 210') ;
- un deuxième orifice (51' ; 51" ; 151' ; 251') en communication fluide avec l'atmosphère ; et
- des moyens de liaison sélectifs (28' ; 80" ; 180' ; 280') entre ledit premier orifice (73' ; 73" ; 173' ; 273') et ledit deuxième orifice (51' ; 51" ; 151' ; 251'), lesdits moyens de liaison sélectifs (28' ; 80" ; 180' ; 280') étant adapté à occuper :
- une position d'isolement dans laquelle ledit premier orifice (73' ; 73" ; 173' ; 273') et ledit deuxième orifice (51' ; 51" ; 151' ; 251') sont isolés l'un de l'autre ; et
- une position de liaison dans laquelle ledit premier orifice (73' ; 73" ; 173' ; 273') et ledit deuxième orifice (51' ; 51" ; 151' ; 251') sont en communication fluide ;
lesdits moyens de liaison sélectifs (28' ; 80" ; 180' ; 280') étant liés mécaniquement audit organe d'actionnement auxiliaire (26' ; 26" ; 126' ; 226') pour que :
- lorsque ledit organe d'actionnement auxiliaire (26' ; 26" ; 126' ; 226') occupe ladite position de repos, lesdits moyens de liaison sélectifs (28', 29' ; 80" ; 180' ; 280') occupent ladite position d'isolement ; et
- lorsque ledit organe d'actionnement auxiliaire (26' ; 26" ; 126' ; 226') occupe ladite position de poussée, lesdits moyens de liaison sélectifs (28' ; 80" ; 180' ; 280') occupent ladite position de liaison.

2. Cylindre de frein ferroviaire selon la revendication 1, **caractérisé en ce que** lesdits moyens de liaison sélectifs comportent un coulisseau (28') monté à l'intérieur dudit organe d'actionnement auxiliaire (26') pour que :
- lorsque ledit organe d'actionnement auxiliaire (26') est en position de repos, ledit coulisseau (28') saille dudit organe en direction dudit piston (13') ; et
- lorsque ledit organe d'actionnement auxiliaire (26') est en position de poussée, ledit coulisseau (28') est à fleur dudit organe d'actionnement auxiliaire (26') et au contact dudit piston (13').

3. Cylindre de frein ferroviaire selon la revendication 2, **caractérisé en ce qu'**il comporte un troisième orifice (41') en communication avec ladite source d'agent de pression pneumatique pour que :
- lorsque ledit coulisseau (28') occupe ladite position d'isolement, ledit troisième orifice (41') et ledit premier orifice (73') sont en communication fluide ; et
- lorsque ledit coulisseau (28') occupe ladite position de liaison, ledit troisième orifice (51') et ledit premier orifice (73') sont isolés l'un de l'autre.

4. Cylindre de frein ferroviaire selon l'une des revendications 2 ou 3, **caractérisé en ce qu'**il comporte un ressort (29') pour solliciter en permanence ledit coulisseau (28') vers ladite position saillante.

5. Cylindre de frein ferroviaire selon la revendication 4, **caractérisé en ce que** ledit ressort (29') est disposé entre ledit coulisseau (28') et ledit organe d'actionnement auxiliaire (26').

6. Cylindre de frein ferroviaire selon l'une des revendications 1 à 5, **caractérisé en ce que** lesdits moyens de commande manuels comportent un organe multiplicateur d'effort (31') pour agir sur ledit organe d'actionnement auxiliaire (26').

7. Cylindre de frein ferroviaire selon la revendication 1, **caractérisé en ce que** lesdits moyens de liaison sélectifs comportent un distributeur (80" ; 180' ; 280') comportant ledit premier orifice (73" ; 173' ; 273') et ledit deuxième orifice (51" ; 151' ; 251'), ledit distributeur (80" ; 180' ; 280') et ledit organe d'actionnement auxiliaire (26" ; 126' ; 226') étant reliés par des moyens de liaison mécanique (30" ; 130'; 230') de sorte qu'ils puissent être actionnés simultanément.

8. Cylindre de frein ferroviaire selon la revendication 7, **caractérisé en ce que** ledit distributeur (80" ; 180' ; 280') comporte des moyens de rappel (29" ; 129' ; 229') le sollicitant en permanence vers sa position d'isolement.

9. Cylindre de frein ferroviaire selon l'une des revendications 7 ou 8, **caractérisé en ce que** ledit distributeur (80") comporte un troisième orifice (41 ") en communication fluide avec ladite source d'agent de pression pneumatique pour que :
- lorsque ledit distributeur (80") occupe ladite position d'isolement, ledit troisième orifice (41 ") et ledit premier orifice (73") sont en communication fluide ; et
- lorsque ledit distributeur (80") occupe ladite position de liaison, ledit troisième orifice (51") et ledit premier orifice (73") sont isolés l'un de l'autre.

10. Cylindre de frein ferroviaire selon l'une des revendications 7 ou 8, **caractérisé en ce que** ladite chambre de pression (110') est de façon permanente en communication fluide avec ladite source d'agent de pression pneumatique.

11. Cylindre de frein ferroviaire selon l'une des revendications 7 à 10, **caractérisé en ce que** lesdits moyens de commande manuels comportent un organe multiplicateur d'effort (31" ; 131') pour agir sur ledit organe d'actionnement auxiliaire (26" ; 126') et ledit distributeur (80" ; 180').

12. Cylindre de frein ferroviaire selon l'une des revendications 7 ou 8, **caractérisé en ce qu'**il comporte un deuxième distributeur (290') comportant un premier orifice (292') en communication fluide avec ladite chambre (210') et un deuxième orifice (295') en communication fluide avec ladite source d'agent de pression pneumatique, ledit deuxième distributeur (290') étant adapté à occuper :
- une position d'isolement dans laquelle ledit premier orifice (292') et ledit deuxième orifice (295') sont isolés l'un de l'autre ; et
- une position de liaison dans laquelle ledit premier orifice (292') et ledit deuxième orifice (295') sont en communication fluide ;
lesdits moyens de liaison mécanique (230') reliant également ledit deuxième distributeur (290') audit organe d'actionnement auxiliaire (226') et audit distributeur (280') pour que :
- lorsque ledit organe d'actionnement auxiliaire (226') occupe ladite position de repos et que ledit distributeur (280') occupe ladite position d'isolement, ledit deuxième distributeur (290') occupe ladite position de liaison ; et
- lorsque ledit organe d'actionnement auxiliaire (226') occupe ladite position de poussée et que ledit distributeur (280') occupe ladite position de liaison, ledit deuxième distributeur (290') occupe ladite position d'isolement.

13. Cylindre de frein ferroviaire selon la revendication 12, **caractérisé en ce que** ledit deuxième distributeur (290') comporte des moyens de rappel (291') sollicitant en permanence ledit deuxième distributeur (290') vers sa position d'isolement.

14. Cylindre de frein ferroviaire selon l'une des revendications 12 ou 13, **caractérisé en ce que** lesdits moyens de commande manuels comportent un organe multiplicateur d'effort (231') pour agir sur ledit organe d'actionnement auxiliaire (226'), ledit distributeur (280') et ledit deuxième distributeur (290').

## Claims

1. Railway brake cylinder including:
- a body (11'; 11"; 111'; 211');
- a piston (13'; 13"; 113'; 213') mobile relative to the body (11'; 11"; 111'; 211') to act, on a brake linkage and delimiting with said body (11'; 11"; 111'; 211') a pressure chamber (10'; 10"; 110'; 210') adapted to be supplied by a pneumatic pressure agent source;
- an auxiliary actuating member (26'; 26"; 126'; 226') mobile relative to said body (11'; 11"; 111'; 211') and said piston (13'; 13"; 113'; 213'), said actuating member being mechanically connected to manual operating means to cause it to occupy:
- either a rest position in which it is away from said piston (13'; 13"; 113'; 213') and so exerts no force on said piston (13'; 13"; 113'; 213');
- or a pushing position in which it is in contact with said piston (13'; 13"; 113'; 213') and exerts a mechanical force on it;
**characterized in that** the brake cylinder includes:
- a first orifice (73'; 73"; 173'; 273') in fluid communication with said chamber (10'; 10"; 110'; 210');
- a second orifice (51'; 51"; 151'; 251') in fluid communication with the atmosphere; and
- selective connection means (28'; 80"; 180'; 280') between said first orifice (73'; 73"; 173'; 273') and said second orifice (51'; 51"; 151'; 251'), said selective connection means (28'; 80"; 180'; 280') being adapted to occupy:
- an isolating position in which said first orifice (73'; 73"; 173'; 273') and said second orifice (51'; 51"; 151'; 251') are isolated from each other; and
- a connecting position in which said first orifice (73'; 73"; 173'; 273') and said second orifice (51'; 51"; 151'; 251') are in fluid communication;
said selective connecting means (28'; 80"; 180'; 280') being mechanically connected to said auxiliary actuating member (26'; 26"; 126'; 226') so that:
- when said auxiliary actuating member (26'; 26"; 126'; 226') occupies said rest position, said selective connection means (28', 29'; 80"; 180'; 280') occupy said isolating position; and
- when said auxiliary actuating member (26'; 26"; 126'; 226') occupies said pushing position, said selective connecting means (28'; 80"; 180'; 280') occupy said connecting position.

2. Railway brake cylinder according to claim 1, **characterized in that** said selective connecting means include a slide (28') mounted inside said auxiliary actuating member (26') so that:
- when said auxiliary actuating member (26') is in the rest position, said slide (28') projects from said member toward said piston (13'); and
- when said auxiliary actuating member (26') is in the pushing position, said slide (28') is flush with said auxiliary actuating member (26') and in contact with said piston (13').

3. Railway brake cylinder according to claim 2, **characterized in that** it includes a third orifice (41') in communication with said pneumatic pressure agent source so that:
- when said slide (28') occupies said isolating position, said third orifice (41') and said first orifice (73') are in fluid communication; and
- when said slide (28') occupies said connecting position, said third orifice (51') and said first orifice (73') are isolated from each other.

4. Railway brake cylinder according to either of claims 2 or 3, **characterized in that** it includes a spring (29') for continuously loading said slide (28') toward said projecting position.

5. Railway brake cylinder according to claim 4, **characterized in that** said spring (29') is disposed between said slide (28') and said auxiliary actuating member (26').

6. Railway brake cylinder according to any of claims 1 to 5, **characterized in that** said manual operating means include a force multiplier member (31') for acting on said auxiliary actuating member (26').

7. Railway brake cylinder according to claim 1, **characterized in that** said selective connecting means include a distributor (80"; 180'; 280') including said first orifice (73"; 173'; 273') and said second orifice (51"; 151'; 251'), said distributor (80"; 180'; 280') and said auxiliary actuating member (26"; 126'; 226') being connected by mechanical connecting means (30"; 130'; 230') so that they can be actuated simultaneously.

8. Railway brake cylinder according to claim 7, **characterized in that** said distributor (80"; 180'; 280') includes return means (29"; 129'; 229') for loading it continuously toward its isolating position.

9. Railway brake cylinder according to either of claims 7 or 8, **characterized in that** said distributor (80") includes a third orifice (41") in fluid communication with said pneumatic pressure agent source so that:
- when said distributor (80") occupies said isolating position, said third orifice (41") and said first orifice (73") are in fluid communication; and
- when said distributor (80") occupies said connecting position, said third orifice (51") and said first orifice (73") are isolated from each other.

10. Railway brake cylinder according to either of claims 7 or 8, **characterized in that** said pressure chamber (110') is continuously in fluid communication with said pneumatic pressure agent source.

11. Railway brake cylinder according to any of claims 7 to 10, **characterized in that** said manual operating means include a force multiplier member (31"; 131') for acting on said auxiliary actuating member (26"; 126') and said distributor (80"; 180').

12. Railway brake cylinder according to either of claims 7 or 8, **characterized in that** it includes a second distributor (290') including a first orifice (292') in fluid communication with said chamber (210') and a second orifice (295') in fluid communication with said pneumatic pressure agent source, said second distributor (290') being adapted to occupy:
- an isolating position in which said first orifice (292') and said second orifice (295') are isolated from each other; and
- a connecting position in which said first orifice (292') and said second orifice (295') are in fluid communication;
said mechanical connecting means (230') also connecting said second distributor (290') to said auxiliary actuating member (226') and to said distributor (280') so that:
- when said auxiliary actuating member (226') occupies said rest position and said distributor (280') occupies said isolating position, said second distributor (290') occupies said connecting position; and
- when said auxiliary actuating member (226') occupies said pushing position and said distributor (280') occupies said connecting position, said second distributor (290') occupies said isolating position.

13. Railway brake cylinder according to claim 12, **characterized in that** said second distributor (290') includes return means (291') for continuously loading said second distributor (290') toward its isolating position.

14. Railway brake cylinder according to either of claims 12 or 13, **characterized in that** said manual operating means include a force multiplier member (231') for acting on said auxiliary actuating member (226'), said distributor (280') and said second distributor (290').

## Patentansprüche

1. Schienenfahrzeugbremszylinder mit:
- einem Körper (11'; 11"; 111'; 211');
- einem Kolben (13'; 13"; 113'; 213'), der zum Einwirken auf ein Bremsgestänge bezüglich des Körpers (11'; 11"; 111'; 211') beweglich ist und mit dem Körper (11'; 11"; 111'; 211') eine Druckkammer (10'; 10"; 110'; 210') begrenzt, die durch eine pneumatische Druckmittelquelle gespeist zu werden vermag;
- einem Hilfsbetätigungsorgan (26'; 26"; 126'; 226'), das in Bezug auf den Körper (11'; 11"; 111'; 211') und den Kolben (13'; 13"; 113'; 213') beweglich ist, wobei das Betätigungsorgan mechanisch mit manuellen Steuermitteln verbunden ist, damit es einnehmen kann:
- entweder eine Ruhestellung, in der es vom Kolben (13'; 13"; 113'; 213') solchermaßen beabstandet ist, dass es auf den Kolben (13'; 13"; 113'; 213') keinerlei Beanspruchung ausübt;
- oder eine Druckstellung, in der es mit dem Kolben (13'; 13"; 113'; 213') in Kontakt ist und auf diesen eine mechanische Beanspruchung ausübt;
**dadurch gekennzeichnet, dass** der Bremszylinder umfasst:
- eine mit der Kammer (10'; 10"; 110'; 210') in Fluidverbindung stehende erste Öffnung (73'; 73"; 173'; 273');
- eine mit der Atmosphäre in Fluidverbindung stehende zweite Öffnung (51', 51"; 151"; 251"); und
- selektive Verbindungsmittel (28'; 80"; 180'; 280') zwischen der ersten Öffnung (73'; 73"; 173'; 273') und der zweiten Öffnung (51', 51"; 151'; 251'), wobei die selektiven Verbindungsmittel (28'; 80"; 180'; 280') einzunehmen vermögen:
- eine Trennstellung, in der die erste Öffnung (73'; 73"; 173'; 273') und die zweite Öffnung (51'; 51"; 151'; 251') voneinander getrennt sind; und
- eine Verbindungsstellung, in der die erste Öffnung (73'; 73"; 173'; 273') und die zweite Öffnung (51'; 51"; 151'; 251') miteinander in Fluidverbindung stehen;
wobei die selektiven Verbindungsmittel (28'; 80"; 180'; 280') mechanisch mit dem Hilfsbetätigungsorgan (26', 26"; 126'; 226') verbunden sind, damit:
- die selektiven Verbindungsmittel (28'; 29'; 80"; 180'; 280') die Trennstellung einnehmen, wenn sich das Hilfsbetätigungsorgan (26'; 26"; 126'; 226') in der Ruhestellung befindet; und
- die selektiven Verbindungsmittel (28'; 80"; 180'; 280') die Verbindungsstellung einnehmen, wenn sich das Hilfsbetätigungsorgan (26'; 26"; 126'; 226') in der Druckstellung befindet.

2. Schienenfahrzeugbremszylinder nach Anspruch 1,
**dadurch gekennzeichnet, dass** die selektiven Verbindungsmittel eine Gleitführung (28') umfassen, die innen in dem Hilfsbetätigungsorgan (26') montiert ist, damit:
- die Gleitführung (28') aus diesem Organ in Richtung des Kolbens (13') vorsteht, wenn sich das Hilfsbetätigungsorgan (26') in der Ruhestellung befindet; und
- die Gleitführung (28') mit dem Hilfsbetätigungsorgan (26') bündig und in Kontakt mit dem Kolben (13') ist, wenn sich das Hilfsbetätigungsorgan (26') in der Druckstellung befindet.

3. Schienenfahrzeugbremszylinder nach Anspruch 2,
**dadurch gekennzeichnet, dass** er eine mit der pneumatischen Druckmittelquelle in Verbindung stehende dritte Öffnung (41') aufweist, damit:
- die dritte Öffnung (41') und die erste Öffnung (73') in Fluidverbindung stehen, wenn sich die Gleitführung (28') in der Trennstellung befindet; und
- die dritte Öffnung (41') und die erste Öffnung (73') voneinander getrennt sind, wenn sich die Gleitführung (28') in der Verbindungsstellung befindet.

4. Schienenfahrzeugbremszylinder nach einem der Ansprüche 2 oder 3,
**dadurch gekennzeichnet, dass** er eine Feder (29') umfasst, um die Gleitführung (28') ständig in die vorstehende Stellung zu drängen.

5. Schienenfahrzeugbremszylinder nach Anspruch 4,
**dadurch gekennzeichnet, dass** die Feder (29') zwischen der Gleitführung (28') und dem Hilfsbetätigungsorgan (26') angeordnet ist.

6. Schienenfahrzeugbremszylinder nach einem der Ansprüche 1 bis 5,
**dadurch gekennzeichnet, dass** die manuellen Steuermittel ein Belastungsverstärkungsorgan (31') umfassen, um auf das Hilfsbetätigungsorgan (26') einzuwirken.

7. Schienenfahrzeugbremszylinder nach Anspruch 1,
**dadurch gekennzeichnet, dass** die selektiven Verbindungsmittel einen Verteiler (80"; 180'; 280') umfassen, der die erste Öffnung (73"; 173'; 273') und die zweite Öffnung (51"; 151'; 251') aufweist, wobei der Verteiler (80"; 180'; 280') und das Hilfsbetätigungsorgan (26"; 126'; 226') durch mechanische Verbindungsmittel (30"; 130'; 230')
solchermaßen miteinander verbunden sind, dass sie gleichzeitig betätigt werden können.

8. Schienenfahrzeugbremszylinder nach Anspruch 7,
**dadurch gekennzeichnet, dass** der Verteiler (80"; 180'; 280') Rückstellmittel (29"; 129'; 229') umfasst, die ihn ständig in seine Trennstellung drängen.

9. Schienenfahrzeugbremszylinder nach einem der Ansprüche 7 oder 8, **dadurch gekennzeichnet, dass** der Verteiler (80") eine mit der pneumatischen Druckmittelquelle in Fluidverbindung stehende dritte Öffnung (41") aufweist, damit:
- die dritte Öffnung (41") und die erste Öffnung (73") miteinander in Fluidverbindung stehen, wenn sich der Verteiler (80") in der Trennstellung befindet; und
- die dritte Öffnung (41") und die erste Öffnung (73") voneinander getrennt sind, wenn sich der Verteiler (80") in der Verbindungsstellung befindet.

10. Schienenfahrzeugbremszylinder nach einem der Ansprüche 7 oder 8, **dadurch gekennzeichnet, dass** die Druckkammer (110') mit der pneumatischen Druckmittelquelle ständig in Fluidverbindung steht.

11. Schienenfahrzeugbremszylinder nach einem der Ansprüche 7 bis 10,
**dadurch gekennzeichnet, dass** die manuellen Steuermittel ein Belastungsverstärkungsorgan (31"; 131') umfassen, um auf das Hilfsbetätigungsorgan (26", 126') und den Verteiler (80"; 180') einzuwirken.

12. Schienenfahrzeugbremszylinder nach einem der Ansprüche 7 oder 8, **dadurch gekennzeichnet, dass** er einen zweiten Verteiler (290') umfasst, der eine mit der Kammer (210') in Fluidverbindung stehende erste Öffnung (292') und eine mit der pneumatischen Druckmittelquelle in Fluidverbindung stehende zweite Öffnung (295') aufweist, wobei der zweite Verteiler (290') einzunehmen vermag:
- eine Trennstellung, in der die erste Öffnung (292') und die zweite Öffnung (295') voneinander getrennt sind; und
- eine Verbindungsstellung, in der die erste Öffnung (292') und die zweite Öffnung (295') in Fluidverbindung stehen;
wobei die mechanischen Verbindungsmittel (230') auch den zweiten Verteiler (290') mit dem Hilfsbetätigungsorgan (226') und dem Verteiler (280') verbinden, damit:
- der zweite Verteiler (290') die Verbindungsstellung befindet, wenn sich das Hilfsbetätigungsorgan (226') in der Ruhestellung befindet und wenn der Verteiler (280') in der Trennstellung befindet; und
- der zweite Verteiler (290') die Trennstellung befindet, wenn sich das Hilfsbetätigungsorgan (226') in der Druckstellung befindet und wenn der Verteiler (280') in der Verbindungsstellung befindet.

13. Schienenfahrzeugbremszylinder nach Anspruch 12,
**dadurch gekennzeichnet, dass** der zweite Verteiler (290') Rückstellmittel (291') umfasst, die den zweiten Verteiler (290') ständig in seine Trennstellung drängen.

14. Schienenfahrzeugbremszylinder nach einem der Ansprüche 12 oder 13,
**dadurch gekennzeichnet, dass** die manuellen Steuermittel ein Belastungsverstärkungsorgan (231') umfassen, um auf das Hilfsbetätigungsorgan (226'), den Verteiler (280') und den zweiten Verteiler (290') einzuwirken.
